# EUROPEAN PATENT SPECIFICATION

(11) **EP 2 954 159 B1**
(45) Date of publication and mention of the grant of the patent: **18.04.2018**
(21) Application number: 13874531.0
(22) Date of filing: 27.12.2013
(51) Int. Cl.: E21B 43/30

(54) **RESERVOIR SEGMENT EVALUATION FOR WELL PLANNING**
RESERVOIRSEGMENTBEURTEILUNG FÜR BOHRLOCHPLANUNG
ÉVALUATION DE SEGMENTS DE RÉSERVOIR POUR PLANIFICATION DE PUITS

(30) Priority: 11.02.2013 US 201361763171 P
(43) Date of publication of application: 16.12.2015
(73) Proprietor: ExxonMobil Upstream Research Company, Spring TX 77389 (US)
(72) Inventor: URIBE, Ruben, D., Humble, TX 77396 (US); SEQUEIRA, Jose, J., The Woodlands, TX 77382 (US); CHENG, Yao-chou, Houston, TX 77082 (US)
(74) Representative: ExxonMobil Chemical Europe Inc.
(86) International application number: PCT/US2013/078013
(87) International publication number: WO 2014/123640

(56) References cited:
- WO-A1-2010/053618
- WO-A1-2012/027020
- WO-A1-2012/027020
- WO-A1-2012/115690
- US-A1- 2011 153 300
- US-A1- 2012 037 359
- BEVAN BUN WO YUEN ET AL: "Optimizing Development Well Placements Within Geological Uncertainty Utilizing Sector Models", SPE RESERVOIR CHARACTERISATION AND SIMULATION CONFERENCE AND EXHIBITION, 11 October 2011 (2011-10-11), XP055318320, DOI: 10.2118/148017-MS

## Description

### CROSS-REFERENCE TO RELATED APPLICATION

This application claims the benefit of U.S. Provisional Patent Application 61/763,171 filed February 11, 2013 entitled METHOD AND SYSTEM FOR RESERVOIR SEGMENT EVALUATION FOR WELL PLANNING.

### FIELD OF THE INVENTION

Exemplary embodiments of the present techniques relate to a method and system for evaluating reservoir segments for well planning.

### BACKGROUND

This section is intended to introduce various aspects of the art, which may be associated with exemplary embodiments of the present techniques. This discussion is believed to assist in providing a framework to facilitate a better understanding of particular aspects of the present techniques. Accordingly, it should be understood that this section should be read in this light, and not necessarily as admissions of prior art.

Field planning involves the design of a drilling plan for an oilfield, or other hydrocarbon resource. One of the objectives of field planning is to maximize the total field production by selecting appropriate well sites for accessing a hydrocarbon reservoir and selecting the reservoir proper configuration for the wellbore. One of the steps in this process is well planning, which involves selecting well sites. The selection of well sites is complicated by numerous considerations, such as environmental issues, maintaining safe distances around wells, and cost. Costs may include costs for facilities and for drilling over the life cycle of the reservoir.

Another aspect of field planning is well path planning. While well path planning is primarily an engineering function, a high-degree of geoscience and engineering integration and collaboration is involved during the planning process to provide an optimal result. The conventional work processes and software tools lack the dynamic data integration capabilities that would be beneficial for interactive, cross-functional analysis and field development and management decisions. In fact, certain technologies are directed to allow geoscience and engineering personnel to more effectively utilize computing and networking technology to manage assets. These technologies include creating an interactive environment having multidimensional data can be displayed, explored, and analyzed to facilitate cross-functional decision making. Applications within this environment include: remote geo-steering of wells as they are drilled; real-time update of log and well test information for rapid update of reservoir models and development drilling plans; monitoring of pressure and flow data from instrumented wells; and production and work over optimization etc.

The well path planning process includes designing well trajectories to optimally penetrate reservoir intervals, while avoiding possible drilling hazards (e.g. shallow gas-bearing sands), and maximizing borehole stability and cost-effectiveness given the properties (e.g. temperature, stress, fluid pressure) of the stratigraphic column between the surface location and drilling targets. Conventional well path planning techniques are often sequential and inefficient. For example, the conventional techniques include (i) selecting potential targets based on geologic interpretation and understanding of reservoir properties by a geologist; (ii) providing the target locations and in some cases a first pass well trajectory to a drilling engineer for more detailed well design and analysis; (iii) identifying potential problems with the well from the results of the well design and analysis step, which involves changes to the target location(s), number of targets, or basic trajectory parameters; (iv) reworking the target location by the geologist and the process is repeated by providing the targets and well trajectory, if any, to the drilling engineer for analysis. The analysis includes well bore stability, torque and drag etc. and requires an understanding of the rock and fluid properties along the trajectory. The required rock and fluid property information can come from a wide variety of sources including nearby well bores and predictive models, but it is commonly difficult for the drilling engineer to obtain and input into their analysis software. In addition, the rock and fluid information is often stored in drilling engineering software in a way that makes it trajectory specific, which hinders or limits reuse of the information from a previously analyzed well when evaluating an updated well design. Also, if updated rock and fluid data becomes available during the time between when wells are planned and actually drilled, the engineer has to, on a well-by-well basis, update this information for each of the existing planned wells. Accordingly, depending on the complexity of the well path and geology, a final trajectory may take multiple iterations (e.g., several weeks or months). The length of time taken to iterate between target selection and detailed well design can limit the number of scenarios examined and lead to sub-optimal results. As a result of these iterations, well path planning is typically based on engineering constraints, and do not effectively integrate geologic interpretation and understanding.

As an example, certain references describe modeling wellbore trajectories, such as U.S. Patent Nos. 6,757,613 and 7,460,957; U.S. Patent App. Publication No. 2007/0199721 and certain commercial software. In particular, U.S. Patent No. 6,757,613 describes a graphical method to design and modify the trajectory of a well bore, which uses control points for altering the shape of the curved section of the wellbore. Similarly, U.S. Patent No. 7,460,957 describes a method that automatically designs a multi-well development plan given a set of previously interpreted subsurface targets. U.S. Patent App. Publication No. 2007/0199721 describes a method of well planning that uses trajectory and earth properties extracted from the geoscience model. Further, certain commercial software provides a tool to plan wells in a 3D visual environment. *See* TracPlanner™ Directional Well Planning Software, Halliburton 2008. This software allows interpreters to visualize geologic information and create targets visually using that information, which may also be utilized for platform and pad positioning optimization for more efficient placement. The user of the software can pick geological targets in 2D or 3D, and can plan wellpaths visually and interactively.

Other references are directed to the completion or planning of the pad, such as U.S. Patent No. 7,200,540 and U.S. Patent App. Publication Nos. 20100191516; 20090200014; and 20070294034. In particular, U.S. Patent No. 7,200,540 also presents a method that selects a possible set of well platform locations from automatically generated target locations. Also, U.S. Patent App. Publication No. 20100191516 describes a method for completion design as part of the well planning process, wherein the well path parameters and completion parameters are specified to generate a set of performance measures, which is then optimized within the model. For pad planning, U.S. Patent App. Publication No. 20090200014 describes a method of pad design of a platform, which computes an optimum slot assignment value for the slot template based on number of slots, number of plans and well trajectories. Similarly, U.S. Patent App. Publication No. 20070294034 describes a method of generating a well site design. In this method, an initial Earth model is built based on the workflow adapted for modeling, drilling and completion operations in a hydrocarbon reservoir, which is used to generate the well site design. WO2012/027020 (Sequeira et al.) describes a system and a method for planning a well path, the method comprising defining a proxy constraint volume as a three-dimensional (3D) cellular volume where each cell has at least one value derived from data from a 3D earth model. Yuen et al. in "Optimizing Development Well Placements Within Geological Uncertainty Utilizing Sector Models" SPE Reservoir Characterization and Simulation Conference and Exhibition (2011) discuss an application of the workflow performing uncertainty analysis on a sector model of a conceptual reservoir and its optimization technique of development wells under geological uncertainty. WO2010/053618 (Holl et al.) relates to a method of planning drilling operation that comprises selecting a set of targeted regions based on data from a three-dimensional shared earth model and generating at least one targeted segment within each one of the set of targeted regions.

Further, other references are directed to the stages approaches to well planning, such as U.S. Patent No. 6,549,879. U.S. Patent No. 6,549,879 describes a systematic, computationally-efficient, two-stage method for determining well locations in a 3D reservoir model, while satisfying various constraints including: minimum interwell spacing, maximum well length, angular limits for deviated completions, and minimum distance from reservoir and fluid boundaries. In the first stage, the wells are placed assuming that the wells can only be vertical. In the second stage, these vertical wells are examined for optimized horizontal and deviated completions. This solution is a systematic process, but it has vertically initialize well segments, which is computationally inefficient.

The conventional well planning processes are subject to certain limitations. For example, well planning processes are typically limited to fixed target locations. As such, the generated trajectories may not effectively take into account reservoir producibility as part of the analysis. To integrate geo-science information and engineering constraints into the well planning processes, there is a need to enhance the integration of the information, such as reservoir connectivity, reservoir properties and producibility into the planning process. Also, conventional techniques may not always honor drilling physics. As such, a need exists for the drillability of the each well trajectory to be integrated into the process

Furthermore, limitations of the current practices suggest a need to provide a process to integrate geologic data, structures and/or reservoir characteristics within a 3D geo-spatial context to enhance the well planning work flow and analysis. In particular, the method may provide a mechanism for geoscientists and engineers to bring together an optimal drill center configuration using a simple well trajectory generation processes based on identification of segments, such as reservoir segments.

### SUMMARY

In one embodiment, a method is presented for well planning. The method includes obtaining a three dimensional (3D) Earth model representing a subsurface region; determining one or more reservoir targets within the 3D Earth model; defining one or more reservoir segments in the 3D Earth model, wherein each of the reservoir segments pass through at least a portion of one of the target reservoirs; evaluating the reservoir segments; and creating a well plan based on the reservoir segments to provide a fluid flow path from the one or more reservoir targets to a well pad through the one or more of the reservoir segments. The method may also include creating the well plan comprises: determining a common surface location for the well pad; coupling the common surface location to the one or more reservoir segments; and evaluating the well plan. Further, the one or more reservoir segments may include a straight section defined by two points between or relative to one or two surfaces; a curved section defined by two points between or relative to one or two surfaces; and/or a continuous line defined by two points between or relative to one or two surfaces.

In yet another embodiment, a system for well planning is described. The system include a processor; memory coupled to the processor; and a set of instructions stored in the memory and accessible by the processor. The set of instructions, when executed, are configured to: obtain a three dimensional (3D) Earth model representing a subsurface region; determine one or more reservoir targets within the 3D Earth model; define one or more reservoir segments in the 3D Earth model, wherein each of the reservoir segments pass through at least a portion of one of the target reservoirs; evaluate the reservoir segments; and create a well plan based on the reservoir segments to provide a fluid flow path from the one or more reservoir targets to a well pad from one or more of the reservoir segments.

### BRIEF DESCRIPTION OF THE DRAWINGS

The advantages of the present techniques are better understood by referring to the following detailed description and the attached drawings, in which:
Figures 1A and 1B are exemplary modeled representations of a subsurface region having a reservoir with associated reservoir segments in accordance with an exemplary embodiment of the present techniques.
Figure 2 is a block diagram of an exemplary well planning method in accordance with an exemplary embodiment of the present techniques.
Figure 3 is a model representation of reservoir segments through two reservoirs having a continuous well trajectory within the 3D earth model in accordance with an exemplary embodiment of the present techniques.
Figure 4 is a model representation of reservoir segments coupled through well trajectories to a pad in accordance with an exemplary embodiment of the present techniques.
Figure 5 is another block diagram of an exemplary well planning method in accordance with an exemplary embodiment of the present techniques.
Figures 6A to 6D are exemplary modeled representations of a subsurface region including reservoirs and reservoir segments in accordance with an exemplary embodiment of the present techniques.
Figures 7A to 7C are exemplary modeled representations of a subsurface region including reservoirs and reservoir segments in accordance with an exemplary embodiment of the present techniques.
Figure 8 is a block diagram of an exemplary cluster computing system that may be used in exemplary embodiments of the present techniques.

### DETAILED DESCRIPTION

In the following detailed description section, the specific embodiments of the present techniques are described in connection with preferred embodiments. However, to the extent that the following description is specific to a particular embodiment or a particular use of the present techniques, this is intended to be for exemplary purposes only and simply provides a description of the exemplary embodiments. Accordingly, the present techniques are not limited to the specific embodiments described below, but rather, such techniques include all alternatives, modifications, and equivalents falling within the true spirit and scope of the appended claims.

At the outset, and for ease of reference, certain terms used in this application and their meanings as used in this context are set forth. To the extent a term used herein is not defined below, it should be given the broadest definition persons in the pertinent art have given that term as reflected in at least one printed publication or issued patent. Further, the present techniques are not limited by the usage of the terms shown below, as all equivalents, synonyms, new developments, and terms or techniques that serve the same or a similar purpose are considered to be within the scope of the present claims.

"Computer-readable medium", "tangible, computer-readable medium", "tangible, non-transitory computer-readable medium" or the like as used herein refer to any tangible storage and/or transmission medium that participates in providing instructions to a processor for execution. Such a medium may include, but is not limited to, non-volatile media and volatile media. Non-volatile media includes, for example, NVRAM, or magnetic or optical disks. Volatile media includes dynamic memory, such as main memory. Common forms of computer-readable media include, for example, a floppy disk, a flexible disk, a hard disk, an array of hard disks, a magnetic tape, or any other magnetic medium, magneto-optical medium, a CD-ROM, a holographic medium, any other optical medium, a RAM, a PROM, and EPROM, a FLASH-EPROM, a solid state medium like a memory card, any other memory chip or cartridge, or any other tangible medium from which a computer can read data or instructions. When the computer-readable media is configured as a database, it is to be understood that the database may be any type of database, such as relational, hierarchical, object-oriented, and/or the like.

The display device may include any device suitable for displaying the reference image, such as without limitation a CRT monitor, a LCD monitor, a plasma device, a flat panel device, or printer. The display device may include a device which has been calibrated through the use of any conventional software intended to be used in evaluating, correcting, and/or improving display results (for example, a color monitor that has been adjusted using monitor calibration software).

Rather than (or in addition to) displaying the reference image on a display device, a method, consistent with the present techniques, may include providing a reference image to a subject.

"Earth model" or "shared earth model" refer to a geometrical/volumetric model of a portion of the earth that may also contain material properties. The model is shared in the sense that it integrates the work of several specialists involved in the model's development (non-limiting examples may include such disciplines as geologists, geophysicists, petrophysicists, well log analysts, drilling engineers and reservoir engineers) who interact with the model through one or more application programs.

"Exemplary" is used exclusively herein to mean "serving as an example, instance, or illustration." Any embodiment described herein as "exemplary" is not to be construed as preferred or advantageous over other embodiments.

"Reservoir" or "reservoir formations" are typically pay zones (for example, hydrocarbon producing zones) that include sandstone, limestone, chalk, coal and some types of shale. Pay zones can vary in thickness from less than one foot (0.3048 m) to hundreds of feet (hundreds of m). The permeability of the reservoir formation provides the potential for production.

"Reservoir properties" and "reservoir property values" are defined as quantities representing physical attributes of rocks containing reservoir fluids. The term "reservoir properties" as used in this application includes both measurable and descriptive attributes. Examples of measurable reservoir property values include porosity, permeability, water saturation, and fracture density. Examples of descriptive reservoir property values include facies, lithology (for example, sandstone or carbonate), and environment-of-deposition (EOD). Reservoir properties may be populated into a reservoir framework to generate a reservoir model.

"Well" or "wellbore" includes cased, cased and cemented, or open-hole wellbores, and may be any type of well, including, but not limited to, a producing well, an experimental well, an exploratory well, and the like. Wellbores may be vertical, horizontal, any angle between vertical and horizontal, deviated or non-deviated, and combinations thereof, for example a vertical well with a non-vertical component.

Wellbores are typically drilled and then completed by positioning a casing string within the wellbore. Conventionally, the casing string is cemented to the well face by circulating cement into the annulus defined between the outer surface of the casing string and the wellbore face. The casing string, once embedded in cement within the well, is then perforated to allow fluid communication between the inside and outside of the tubulars across intervals of interest.

Exemplary embodiments of the present techniques relate to methods and systems for well planning. The techniques may determine multiple well site locations for accessing a hydrocarbon reservoir, while each well site may include multiple wellbores to various reservoir targets accessible from the well site location.

The present disclosure is related to a method to enhance well planning by reducing the time period for the design stage of well planning (e.g., from inception to a drill-ready state) and to enhance well planning process by enhancing the integration of the reservoir geoscientist and reservoir engineer. The method utilizes reservoir segments to integrate an optimal drill center configuration using a simple well trajectory generation processes for geoscientists and engineers. The reservoir segments are utilized as the initialized well path segments to accommodate a bottom-up approach for drill center and/or well path planning tasks. The reservoir segment is a desired path within the reservoir characterized by its potential and a partial segment of a well trajectory. The reservoir segments may include factors, such as pore pressure, fracture gradient, temperature, lithology (sand/shale), stress orientation and magnitude, reservoir sweet spots, 3D geo-bodies, identified drainage boundaries and specified locations with uncertainties. These factors may be utilized to enhance the well planning selection process. That is, these factors may be utilized to plan different well scenarios to determine and/or verify preferred well paths.

Beneficially, the method provides enhancements for the well paths because it reduces the inefficient recycling of designs with the drilling contractor and it may also provide an optimal final well path. Also, the interactive and/or dynamic evaluations of reservoir properties in a 3D earth environment provide efficient update and/or assessment of drilling parameters, such as well completions and/or perforations. Also, the method efficiently integrates geologic data, structures and/or reservoir characteristics within a 3D geo-spatial context to enhance the well planning analysis. The method also provides integration of more data types (e.g., geologic data, structure, and reservoir properties, as noted above) to enable evaluation of pay-off as compared to well cost.

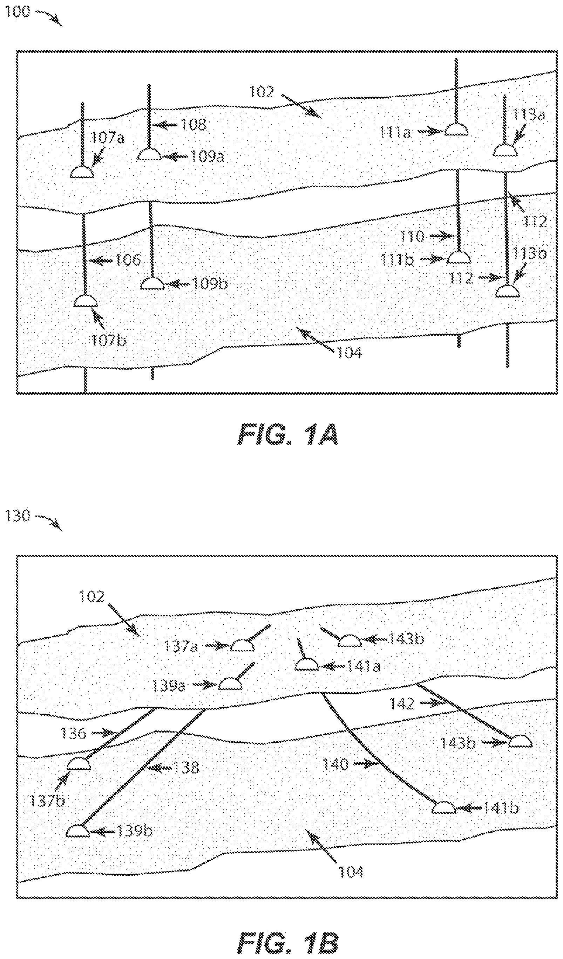

The present techniques method/workflow can be applied in the creation of a single wellbore or a series of wellbores initialized as reservoir segments with the ability to connect those reservoir segments to a common surface location or drill center after editing the reservoir segment's target locations and orientations. In one or more embodiments, the method for reservoir segment evaluation for the well path planning in a collaborative 3D earth model may include various steps. These steps may include identify a set of reservoirs from a three-dimensional (3D) Earth model; obtaining geographic and geological data and models from the geological analysis and/or reservoir simulations; generating one or more reservoir segments within each one of the reservoirs; evaluating the reservoir segments within each one of the reservoirs based on a potential payout in terms of production of hydrocarbons; updating the reservoir segments via iterate number, inclination, and orientation of reservoir segments to optimize pay out; and identifying well pad location and generating at least one well trajectory through at least one reservoir segment and further evaluating the well pad location and its associated well trajectories based on the potential payout in terms of at least one parameter such as production of hydrocarbons, drilling complexity (e.g., stability of the well path), cost and stability of well planning. The present techniques are described further with reference to Figures 1A to 1B, 2, 3, 4, 5, 6A to 6D, 7A to 7C and 8.

To provide enhancements over conventional methods, the present techniques utilize reservoir segments. The reservoir segments represent a potential drilling pathway for a targeted reservoir region. Reservoir segments differ from typical well paths because the reservoir segments do not represent the complete path and may not connect in any way to a surface location initially. The reservoir segment provides a mechanism to initialize a tangent portion of the well path and the potential completion interval exposed to the reservoir before a complete well is designed. That is, the reservoir segment is a desired path within the reservoir characterized by its potential and a partial segment of a well trajectory. A the reservoir segment may include a straight section defined by two points between or relative to one or two given reservoir surfaces, a curved section defined by two points between or relative to one or two given reservoir surfaces, and/or a continuous line defined by two points between or relative to one or two given reservoir surfaces. That is, as the reservoir segments do not have to be initialized using surfaces, reservoir segments may utilize other objects (e.g., point sets, polylines, models, etc.) or just XYZ coordinate information, which does not have to be associated with an object. Advantageously, the reservoir segments provide more flexibility to be edited and/or modified than complete well paths, which provides an efficient mechanism for a user to consider different scenarios in an enhanced manner. Also, the reservoir segments may include factors that are utilized to optimize the recovery from the reservoir. For example, the factors may include pore pressure, fracture gradient, temperature, lithology (sand/shale), stress orientation and magnitude, reservoir sweet spots, 3D geo-bodies, identified drainage boundaries and specified locations with uncertainties. These factors may be utilized to enhance the selection process.

In one exemplary embodiment, a reservoir segment may include a straight section defined by two points for two reservoir surfaces, as shown in Figures 1A and 1B. In Figures 1A and 1B, a modeled representation of a subsurface region of a reservoir is illustrated as a first modeled representation **100** and a second modeled representation **130.** Each of these modeled regions **100** and **130** include a first reservoir surface **102** and a second reservoir surface **104.** These surfaces **102** and **104** may represent layers of rock that include hydrocarbon fluids, and/or may represent the top and base of a layer or number of layers of rock that include potential hydrocarbon fluids.

As shown in Figure 1A, the first modeled region **100** includes reservoir segments **106, 108, 110** and **112** that are substantially perpendicular straight lines between the surfaces **102** and **104.** In particular, the reservoir segment **106** is a line between a first target **107a** in the first reservoir surface **102** second target **107b** in the second reservoir surface **104,** the reservoir segment **108** is a line between a first target **109a** in the first reservoir surface **102** and a second target **109b** in the second reservoir surface **104,** the reservoir segment 110 is a line between a first target **111a** in the first reservoir surface **102** and a second target **111b** in the second reservoir surface **104** and the reservoir segment **112** is a line between a first target **113a** in the first reservoir surface **102** and a second target **113b** in the second reservoir surface **104.**

As shown in Figure 1B, the first region **130** includes reservoir segments **136, 138, 140** and **142** that are substantially perpendicular straight lines between the surfaces **102** and **104.** In particular, the reservoir segment **136** is a line between a first target **137a** in the first reservoir surface **102** second target **137b** in the second reservoir surface **104,** the reservoir segment **138** is a line between a first target **139a** in the first reservoir surface **102** and a second target **139b** in the second reservoir surface **104,** the reservoir segment **140** is a line between a first target **141a** in the first reservoir surface **102** and a second target **141b** in the second reservoir surface **104** and the reservoir segment **142** is a line between a first target **143a** in the first reservoir surface **102** and a second target **143b** in the second reservoir surface **104.**

From these different modeled regions **100** and **130,** the reservoir segments may indicate different configurations of the well trajectories. For example, the reservoir segments in the region **100** may be mapped to a single pad for each wellbore or may be mapped to different pads, depending on the spacing between the wellbores. The reservoir segments in region 130 may be mapped to a single pad, as the reservoir segments appear to be optimized in trajectories that are directed to a substantially common central location. Accordingly, the method may be applied in the creation of a single wellbore or a series of wellbores initialized as reservoir segments with the ability to connect the reservoir segments to a common surface location or drill center after editing the reservoir segment's target locations and orientations.

The disclosed techniques provide a method for creating a wellbore starting at the reservoir level. By beginning with the creation and edits of the reservoir segment(s), the complexity of editing a complete and potentially complex well path is reduced. That is, by relying on reservoir segments, the method may investigate the location, orientation and inclination of the reservoir segment through the reservoir before creating complete well paths. Accordingly, the reservoir segments enhance the well planning process by requiring less computational processing and time associated with the well planning design.

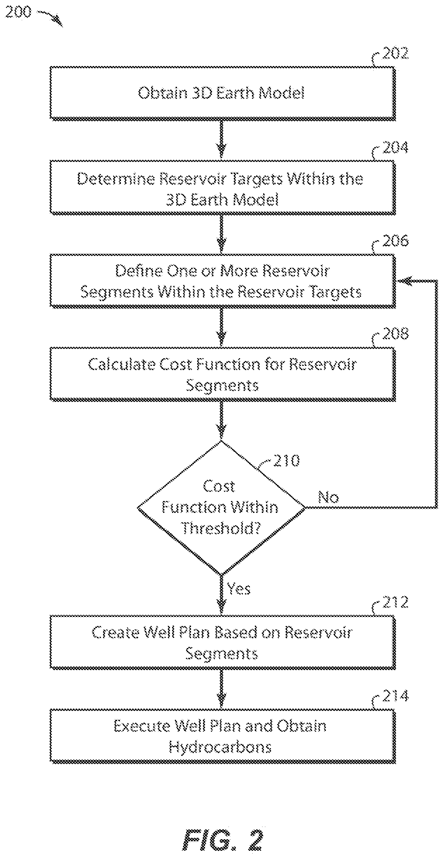

As an example of one embodiment, Figure 2 is a process flow diagram of a method **200** for well planning with reservoir segments in accordance with an exemplary embodiment of the present techniques. The blocks **202** to **212** of the method may be performed in the design stage prior to drilling, while block **214** may be performed in the operation stage.

The method **200** may begin at block **202,** where a three dimensional (3D) shared earth model may be obtained. In some embodiments, the shared earth model may be generated. The shared earth model may include one or more hydrocarbon fields with potential reservoirs, and geographic maps for ground surface of the fields. The maps may indicate man-made and natural objects, such as pipelines, hazard regions, geological features (e.g. salt bodies and faults), existing well site platforms, and well paths. At block **204,** one or more reservoir targets may be determined within the 3D Earth model. The reservoir targets may include target areas in the reservoir, which are desired. The determination of the locations and the size of the reservoir targets or target areas may be performed based on some understanding and analysis of certain reservoir properties. These reservoir properties may include composition, quality, and connectivity to other areas of the reservoir. The number of reservoir targets and/or the spacing between reservoir targets may be determined based on an analysis of potential development strategies. As an example, the reservoir targets may be selected based on an unconventional resources where the subsurface targets are equally spaced in a predetermined grid, and/or the reservoir targets may include user selected targets based on geologic and engineering data inside the 3D earth model to base the location of potential wells.

At block **206,** the reservoir segments within the determined reservoir targets are defined. The defining the reservoir segment may include applying weights to various factors that are utilized to optimize the recovery from the reservoir. For example, the factors may include pore pressure, fracture gradient, temperature, lithology (sand/shale), stress orientation and magnitude, reservoir sweet spots, 3D geo-bodies, identified drainage boundaries and specified locations with uncertainties. The reservoir segments may include certain constraints may specify basic trajectory parameters such as dog-leg severity, kick-off depth, hold distances and trajectory type. Anti-collision or inter-well constraints may also be imposed through well-to-well distance functions

Further, the defining the reservoir segments may include defining a line or continuous segment through the reservoir. As noted above, the defined reservoir segments may include a straight section defined by two points between or relative to one or two given reservoir surfaces, a curved section defined by two points between or relative to one or two given reservoir surfaces, and/or a continuous line defined by two points between or relative to one or two given reservoir surfaces, as noted above.

Once the reservoir segments are defined, a cost function may optionally be calculated for the reservoir segments, as shown in block **208.** The cost function calculation may be performed for each reservoir segment individually and/or for two or more reservoir segments together. The cost function may be utilized to optimize the wellbore trajectory through the reservoir. The cost function may be based on minimizing net sand or net pay penetrated by the reservoir segment, minimizing the drilling cost and/or maximizing production of the hydrocarbons. Then, a determination is made whether the cost function is within a threshold, as shown in block **210.** If the reservoir segment is not within a specified threshold, the reservoir segments may be redefined in block **206.** This redefining the reservoir segments may include adjusting the factors utilized to define one or more of the reservoir segments.

If the reservoir segment is within a specified threshold, the well plan may be created based on the reservoir segments, as shown in block **212.** The creation of the well plan may include modeling the well trajectory and/or well pads to determine the well path, which may involve using known techniques. The well path, well site location and pad may be created to limit environmental impact and perform the drilling within the given geological and engineering constraints. As an example, after reservoir segments are set in the desired location, then a common surface location (e.g., pad, drill center, etc.) may be coupled to the reservoir segments. In some applications, the orientation of one or more of those reservoir segments may not be optimal and cannot be drilled from the selected surface location. Accordingly, the reservoir segment may be reoriented to provide a path that may be generated.

Well planning may include selecting the locations of well pad, which involves several input considerations. These considerations include, in part, the cost of well-site construction, environmental impacts, the number of wells to adequately drain the reservoir, as well as selection of reservoir targets to position the well pads. Also, environmental consideration may be utilized, which include the avoidance of surface obstacles, which may include man-made and natural obstacles (e.g., a residential area, a river, a road, a pipeline and the like). The well pad may be selected to maintain a predetermined distance from such obstacles.

In well planning, there are numerous trade-offs between considerations for a single well pad (e.g., location, well design, well drilling costs, well trajectory design, etc.) and the economic considerations of producing and developing a hydrocarbon field over its full life cycle. One approach of well planning is to place the well pad as close as possible to the reservoir targets to reduce the cost of drilling. Another approach is to minimize the number of reservoir targets that are not accessible due to the surface and/or drilling constraints. Accordingly, this aspect of the well planning may be performed on an ad-hoc basis, based on modeling and/or based on solving an objective function.

A set of well trajectories starting from the slots of the well pad can then be designed according to well path algorithms and other engineering constraints. In addition to maintaining safe distances from certain obstacles (e.g., surface obstacles), well planning also takes into account maintaining minimum distances between the paths of the wells and geological features of the overburden. As a result, the well planning parameters may include well site configuration, maximum horizontal reach, well trajectory constraints, anti-collision constraints, and quality of penetration of the reservoir. Other parameters, such as environmental constraints, minimal stand-off distance to surface or subsurface objects may also be specified. In one embodiment of the present techniques, a user, such as a geoscientist or drilling engineer, may define well planning parameters as part of an optimization process. Thus, the method may create a well plan based on a combination of environmental, geological, and engineering constraints.

As an example, the creation of a well plan may include various steps. The steps may include determining a well trajectory for each of the slots in the well pad to one of reservoir segments. Also, the creating the well plan may include evaluating the well pad location and/or well trajectories based on one or more of maximizing production of hydrocarbons, minimizing drilling complexity, and minimizing drilling cost. Further still, the creating the well plan may include determining a common surface location for the well pad; coupling the common surface location to the one or more reservoir segments; and evaluating the well plan.

At block **214,** the well plan may be executed and hydrocarbons may be obtained. The well plan execution may include providing the performing well drilling activities based on the well plan. The wells may be drilled at one or more of the determined well site locations. Well site locations may be selected for conducting detailed well drilling activities according to development stages of the field. For each well at the selected locations, the potential production, bore stability, torque, drag, and the like, may be evaluated. Drilling completion and performance processes, such as described in patent application Intl. Patent App. Pub. No. 2009/032416, may also be performed.

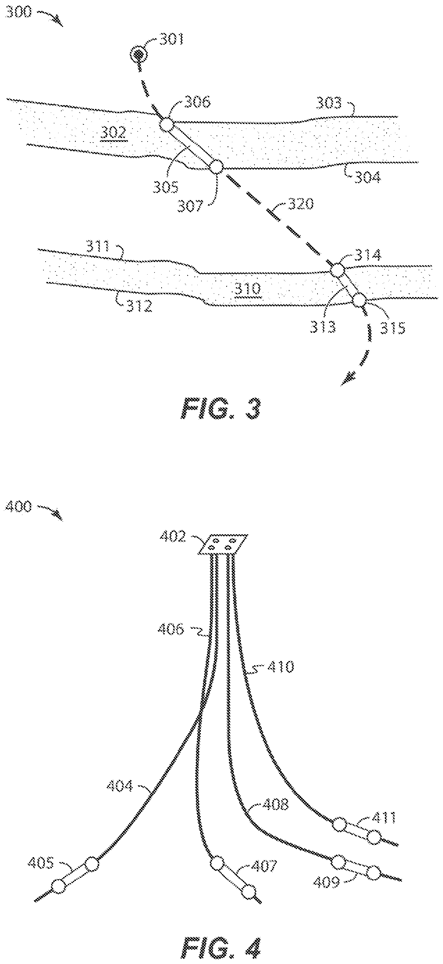

As an example, Figure 3 is a model representation **300** of reservoir segments through two reservoirs having a continuous well trajectory within the 3D earth model in accordance with an exemplary embodiment of the present techniques. The model representation **300** includes a first reservoir **302** and a second reservoir **310,** which may represent layers of rock that include hydrocarbon fluids. The first reservoir **302** includes a first surface **303** and a second surface **304** along with a first reservoir segment **305.** The reservoir segment **305** passes through a first target **306** in the first surface **303** and a second target **307** in the second surface **308.** Similarly, the second reservoir **310** includes a first surface **311** and a second surface **312** along with a second reservoir segment **313.** The second reservoir segment **313** passes through a first target **314** in the first surface **311** and a second target **315** in the second surface **312.** The continuous well trajectory **320** is a continuous pathway within the 3D earth model that trails through reservoir segments **305** and **313** for each potential reservoir **302** and **310.**

Without planning the entire well trajectory at first, the geoscientists direct the analysis on the producibility of the targeted reservoirs **302** and **310** based on reservoir properties derived from, but not limited to seismic data, geological model and/or reservoir simulations. Once the reservoir segments **305** and **313** for each potential reservoir **302** and **310** is determined. A complete well trajectory starting from a surface location **301** can then be determined based on the engineering constraints, such as dogleg severity, hazard avoidance, etc. The complete well trajectory may also include geologic constraints as well, such as over or under pressured reservoirs, hydrates, unstable formations, etc.

As yet another example, Figure 4 is a model representation **400** of reservoir segments coupled through well trajectories to a pad in accordance with an exemplary embodiment of the present techniques. In this model representation **400,** a pad **402,** which may be a well site, facility or platform that is located on land or at sea level, contains slots (e.g., represented by the circles on the pad **402**) in which each slot is a starting location of a well trajectory that reaches reservoir segments. Specifically, the well trajectory **404** that reaches the reservoir segment **405,** the well trajectory **406** that reaches the reservoir segment **407,** the well trajectory **408** that reaches the reservoir segment **409,** and the well trajectory **410** that reaches the reservoir segment **411.**

In this configuration, the pad **402** has four planned well paths are shown by the well trajectories **404, 406, 408** and **410** to the respective reservoir segments **405, 407, 409** and **411.** In this representation **400,** the four reservoir segments **405, 407, 409** and **411** are created first and then the four well trajectories **404, 406, 408** and **410** are planned, such that each well trajectory **404, 406, 408** or **410** passes through at least one of the reservoir segments **405, 407, 409** and **411.** The entire well planning process, including the pad design (e.g., selection of well site), selection of number of well paths as well as the locations and trajectories of each reservoir segment, may be performed in an interactive process guided by geoscientists and/or drilling engineers. The well planning process may also include the use of optimization algorithms. As an example, anti-collision optimization algorithms may be utilized to select slots in a drill center closer to the targets, etc. Other potential optimization technique may include an auto search within a specific area for a surface location based on known constraints and the same may apply to an auto search for target locations.

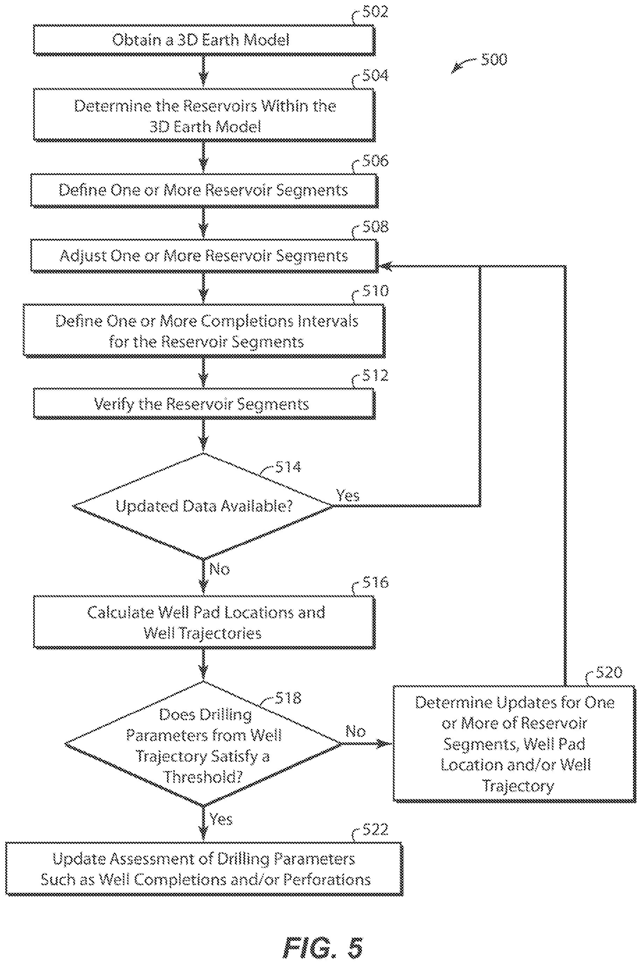

As an example of another embodiment, Figure 5 is a process flow diagram of a method **500** for well planning with reservoir segments in accordance with an exemplary embodiment of the present techniques. In this method, the blocks **502** to **522** may be performed in the design stage prior to drilling, as an alternative flow for blocks **202** to **212** of Figure 2. Once the design stage is complete, the operations stage may be performed in a manner similar to that noted above in block **214.**

The method **500** may begin at block **502,** where a three dimensional (3D) earth model may be obtained. In certain embodiments, the 3D Earth model may be generated from one or more of geological data objects, data models from geological analysis and/or reservoir simulations. The 3D earth model may include one or more hydrocarbon fields with potential or target reservoirs, and geographic maps for ground surface of the fields. The maps may indicate man-made and natural objects, such as pipelines, hazard regions, geological features (e.g. salt bodies and faults), existing well site platforms, and well paths. The 3D Earth model may include information that is utilized to optimize placement of a well pads and/or well paths to reservoirs. In preferred embodiments, the 3D Earth model may include a 3D representation of the Earth model(s) on a computer with visualization capabilities. The computer system could be a single processor unit or preferably a networked multi-processor system.

At block **504,** one or more potential or target reservoirs may be determined within the 3D Earth model. The reservoirs may include target areas in the model that indicate hydrocarbons may be present (e.g., one or more hydrocarbon filled regions). The reservoir(s) may be bounded by two or more surfaces (e.g., a top surface and a base surface).

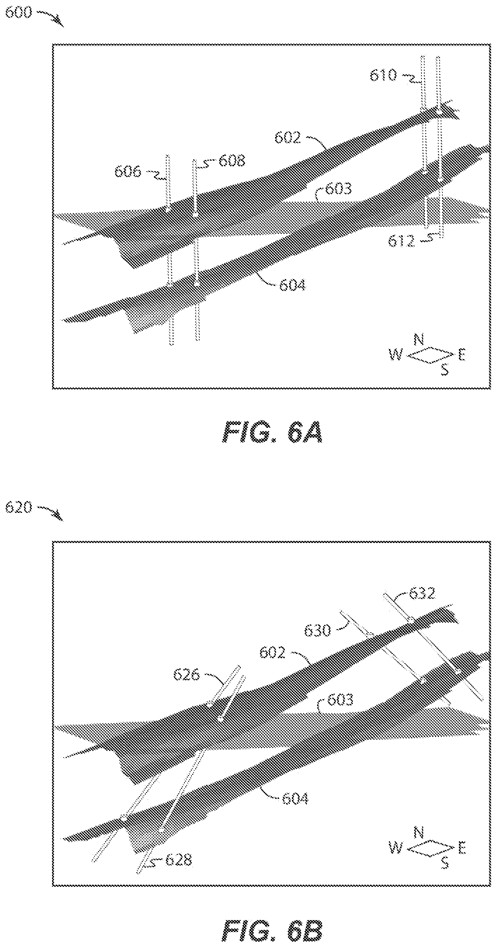

Once the reservoirs are determined, one or more reservoir segments may be defined, as shown in block **506.** The defining the reservoir segments may include analyzing reservoir properties, connectivity and constraints from the models to define potential target areas. These target areas may be utilized to identify locations to place initial reservoir segments. Each of the reservoir segments may extend from between the surfaces and/or may extend into a region adjacent to the surfaces outside the targeted reservoir. The reservoir segment(s) may be substantially vertical lines, but may include other continuous lines, as noted above. That is, these reservoir segments do not have to be confined to reservoir areas. An example of a substantially horizontal line as a reservoir segment is described further below in Figure 6A.

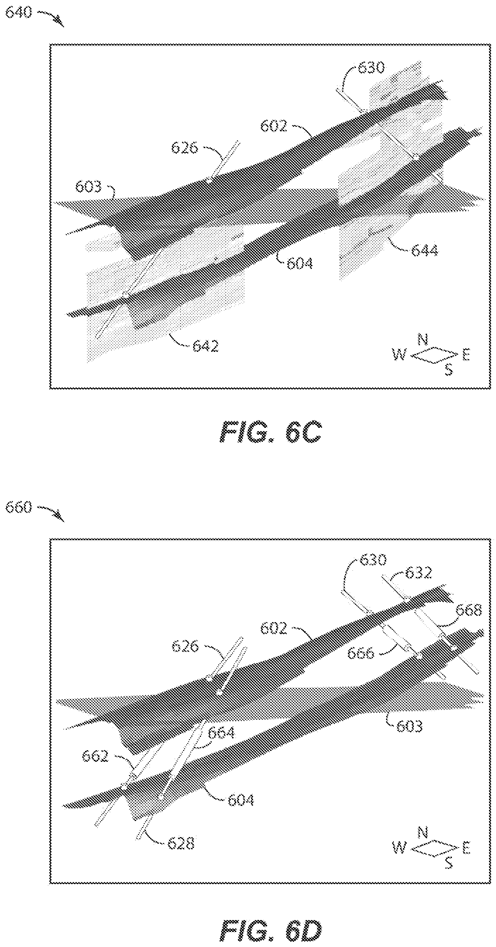

Once the reservoir segments are defined, one or more reservoir segments may be adjusted, as shown in block **508.** The adjustment of the reservoir segments may include editing the reservoir segments positioning by adjusting the target locations in the surfaces that define the boundaries of the reservoir (e.g., location in the reservoir and/or adjusting the orientation of the reservoir segments). The adjustment may be performed to maximize the exposure of the reservoir segment(s) to the reservoir. Also, the adjustment may be influenced by various update factors: i) updated or new data as it becomes available, which may influence the location of the reservoir segments; b) simulation results or other analysis outside the 3D earth model may trigger reservoir segment location changes; and/or c) well path from desired surface location cannot be created because of a reservoir segment's orientation. Further, the target locations in the surfaces for the reservoir segment(s) may be adjusted individually (e.g., one of the surfaces may be locked to its location, while the other target location is able to move in 3D space). Alternatively, the reservoir segment may be adjusted with both target locations, where the two targets move or translate in tandem maintaining the reservoir segment(s) attitude, which is the orientation of a planar or linear feature in three-dimensional space (e.g., or reservoir segment(s) inclination and azimuth), but not its position in XY space. That is, if the target locations are locked relative to surfaces, the target locations may remain locked to a surface or point as the reservoir segment is translated. The change in orientation, length and location of the reservoir segment(s) may be validated and/or evaluated relative to the geological data objects and data models. This process may result in maximizing potential pay, minimizing risk, and/or minimizing cost of potential wells, as shown and discussed further in Figures 6B and 6C below.

At block **510,** one or more completion intervals may be defined for the reservoir segments. The defining of the one or more completion intervals may include one or more perforations and/or completion hardware, such as sand screens and the like, along the path of the reservoir segment. The completion interval may be defined manually between surfaces or with standoff from surfaces. As the reservoir segment is edited and re-positioned perforations along the reservoir segment may be configured to update based upon their initialization criteria. An example is discussed further below with reference to Figure 6D.

At block **512,** the reservoir segments may be verified. This verification may include testing the quality of the location of the reservoir segment(s) in a simulation and/or geologic model to validate their potential as producer or injector candidates. As the reservoir segments are edited, data may be extracted from the reservoir model(s) or seismic and provided to a user via a display or graphical interface to convey certain information regarding the quality of the location within the reservoir. Vertical planes along the well bore with textures of extracted model properties or extracted model properties from the intersection of the well and model displayed as well logs can be used to visualize and further verify the quality of the reservoir segment position. Further, the engineering constraints and geological constraints, such as safe distance to certain geological objects, may also be utilized to verify the reservoir segments. Violations of these constraints may include notification to the user via a display or other suitable indication. In certain embodiments, the result provided from this verification may provide an optimal location for the reservoir segment(s) before it is connected to a surface location, which is discussed further in Figure 6C. Further, the process may also include a flow from block 512 to block 508, in the event that one or more adjustments are to be performed on the reservoir segments, as a result of one or more update factors.

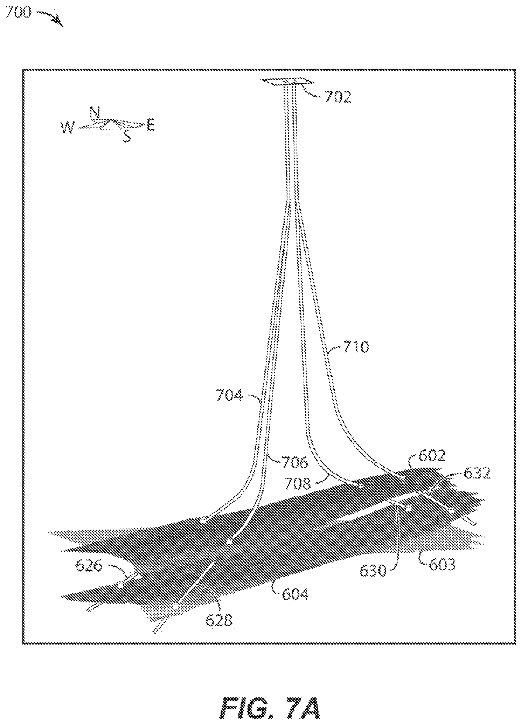

At block **514,** a determination is made whether updated data is available. The updated data may include additional survey data, analysis and/or modeling of the subsurface region. If updated data is available, the method proceeds to block **508** to adjust one or more of the reservoir segments. However, if the updated data is not available, well pad locations and well trajectories may be calculated, as noted in block **516.** The well pad locations and well trajectories may be calculated to reach the defined reservoir segments, which may include determining optimal location for the well trajectories. Also, the well pad locations and well trajectory should satisfy the engineering constraints and/or geological constraints That is, the calculation may include well trajectories from a well pad (e.g., a common surface location or drill center) to the one or more reservoir segments, such that the path defined is a viable and a drillable path defined by industry drilling physics. The well pad may be relocated to address geographic obstacles at the surface, ocean floor or subsurface. Examples of wells paths attached to the well pad are described further below in Figures 7A to 7C.

Then, at block **518,** a determination is made whether the drilling parameters from the well trajectory satisfy a threshold. The threshold may be calculated from an objective function and/or may be based on a user's decision. The determination may be performed for each of the well trajectories individually and/or for a combination of two or more well trajectories. If the drilling parameters do not satisfy the drilling parameters, then a determination is made to adjust one or more of the reservoir segments, well pad location and/or well trajectory, as shown in block **520.** Then, the process may continue to blocks **508** to **518** to update the various aspects of the well plan.

If the drilling parameters do satisfy the threshold, then an assessment of drilling parameters, such as well completions and/or perforations, as shown in block **522.** This may include storing the well plan and/or communicating the well plan for the operations stage. The well plan created from this process is a substantially drill ready before is handed to the drilling engineer or drilling contractor for final approval. As an example, the drilling team may have specific rules that need to be satisfied when building a well path. If the reservoir segment is in a location that permits the connection to a specific surface location and the rules are satisfied, then other detailed planning may be performed. This additional detailed planning may include determining how and where to complete the well, whether it is open to flow or injection, casing points, etc.

In one or more embodiments, the method may include analysis of other data and/or cost functions to evaluate the one or more of the reservoir segments (e.g., individually or in a group). The evaluation of the reservoir segments may include comparing one or more of geographic data, geological data and seismic data associated with the subsurface region with the reservoir segments to verify the reservoir segments. The verification may include determining if one or more of the reservoir segments do not optimize a cost function or do not satisfy certain criteria. The geographic data may include topography data, surface/submarine infrastructure (e.g., roads, houses, buildings, pipelines, etc.); the geologic data may include the type of rock (e.g., lithology), structural framework, hazards (e.g., pressurized or under pressurized formations, etc.); and the seismic data may include measured data that is a proxy for some of the geologic features above. If the reservoir segments do not satisfy the cost function or do not satisfy the verification, one or more of the reservoir segments may be updated. As noted above, the reservoir segments may be updated by changing one or more of inclination, orientation and location of the reservoir segments to optimize the cost function or based on the comparison (e.g., to satisfy the verification or satisfy the certain criteria).

The proposed methods may be utilized for depletion planning of a field. When potential reservoirs have been identified in the subsurface, the next stage is to plan a number of wells to extract the hydrocarbons and to support the pressure needed to maximize the recovery of the resources. Reservoir segments (e.g., reservoir completion sections) are created in a 3D modeling environment with existing geologic and simulation models together with other pertinent data to determine the most optimal location for the potential drill wells. Once the locations are decided, complete well plans are created to connect the one or more common surface locations (e.g., well pads or drill centers) with the reservoir segments.

Also, the above methods may also be useful for individual well planning in addition to field planning. That is, the workflow may also be useful when planning individual wells that involve planning to maximize potential injectivity and/or producibility. For these well plans, close interrogation with simulation models is useful to determine the optimal location before creating a complete well. As such, the described process further enhances the well planning methods.

As an example of the above methods is described further in Figures 6A to 6D and 7A to 7C. Figures 6A to 6D are exemplary modeled representations of a subsurface region including reservoirs and reservoir segments in accordance with an exemplary embodiment of the present techniques. Similarly, Figures 7A to 7C are exemplary modeled representations of a subsurface region including reservoirs, well trajectories and reservoir segments in accordance with an exemplary embodiment of the present techniques. Similar reference numerals may be utilized for similar features within the model representations.

As shown in Figure 6A, the modeled region **600** includes reservoir segments **606, 608, 610** and **612** that are substantially perpendicular straight lines between the surfaces **602** and **604.** The oil water contact (OWC) **603** may be a representation of a substantially horizontal surface within the modeled region **600.** This modeled region **600** may represent the initial stage of positioning the reservoir segments. For example, this modeled representation **600** may be the reservoir segments defined in block **206** of Figure 2 and/or in block **506** of Figure 5.

As shown in Figure 6B, the modeled region **620** includes reservoir segments **626, 628, 630** and **632** that are deviated lines oriented between the surfaces **602** and **604.** This modeled region **600** may represent the adjustments and/or optimizations to the positioning the reservoir segments. For example, this modeled representation **620** may be the reservoir segments defined in one or more of blocks **206** to **210** of Figure 2 and/or in one or more of blocks **508** and **520** of Figure 5.

As shown in Figure 6C, the modeled region **640** includes reservoir segments **626,** and **630** that are deviated lines oriented between the surfaces **602** and **604.** This modeled region **600** may represent the verification of the reservoir segments. To provide verification, the process may include representative logs (e.g., pseudo logs) and/or vertical planes from geologic data and/or seismic data, which is represented by data planes **642** and **644.** The data planes **642** and **644** may include extracted properties from seismic, geologic and/or simulation models. For example, this modeled representation **640** may be the reservoir segments defined in one or more of blocks **206** to **210** of Figure 2 and/or in one or more of blocks **512** and **514** of Figure 5.

As shown in Figure 6D, the modeled region **660** includes reservoir segments **626, 628, 630** and **632** that are deviated lines oriented between the surfaces **602** and **604.** This modeled region **600** may represent the placement of completion intervals **662, 664, 666** and **668** (e.g., completion or perforation intervals) associated with the reservoir segments. For example, this modeled representation **660** may be the defining of the completion intervals for the respective reservoir segments defined in blocks **206** to **210** of Figure 2 and/or in block **510** of Figure 5.

Beneficially, the modeled regions 620, 630 and 640 provide useful information that may be utilized to enhance the process. Specifically, the modeled regions 620, 630 and 640 (e.g., portions of an earth model) provide information that may aid in the proper orientation/optimization of the reservoir segment's location, including the design of completion intervals. The specific design of the reservoir segments may depend on whether the reservoir is to be developed by production and/or injection techniques.

As shown in Figure 7A, the modeled region **700** includes well trajectories **704, 706, 708** and **710** from a well pad **702** to the reservoir segments **626, 628, 630** and **632.** This modeled region **700** may represent the placement of well paths to a common surface location or drill center, which is the well pad **702.** The well trajectories **704, 706, 708** and **710** may each be associated with one of the reservoir segments **626, 628, 630** and **632.** For example, this modeled representation **700** may be the creating or calculating of a well plan in blocks **212** of Figure 2 and/or the in block **516** to **522** of Figure 5.

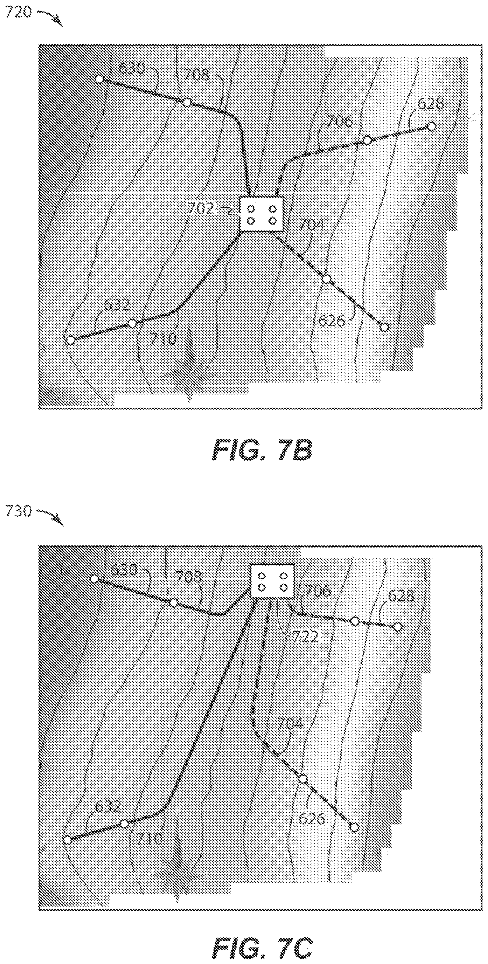

As shown in Figure 7B, the modeled region **720** includes well trajectories **704, 706, 708** and **710** from a well pad **702** to the reservoir segments **626, 628, 630** and **632** from a top perspective view. This modeled region **720** may represent relocation of the well pad **702** via an interactive process and/or optimization process for the selected reservoir segments **626, 628, 630** and **632.** For example, this modeled representation **720** may be the creating or calculating of a well plan in blocks **212** of Figure 2 and/or the in block **516** to **522** of Figure 5.

As shown in Figure 7C, the modeled region **730** includes well trajectories **704, 706, 708** and **710** from a well pad **732** to the reservoir segments **626, 628, 630** and **632** from a top perspective view. This modeled region **723** may represent relocation of the well pad **732** via an interactive process and/or optimization process for the selected reservoir segments **626, 628, 630** and **632.** For example, this modeled representation **730** may be the creating or calculating of a well plan in blocks **212** of Figure 2 and/or the in block **516** to **522** of Figure 5.

Beneficially, the modeled regions 700, 720 and 730 provide a different perspective on the useful information that may be utilized to enhance the process.

Persons skilled in the technical field will readily recognize that in practical applications of the disclosed methodology, it is partially performed on a computer, typically a suitably programmed digital computer. Further, some portions of the detailed descriptions which follow are presented in terms of procedures, steps, logic blocks, processing and other symbolic representations of operations on data bits within a computer memory. These descriptions and representations are the means used by those skilled in the data processing arts to most effectively convey the substance of their work to others skilled in the art. In the present application, a procedure, step, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present application, discussions utilizing the terms such as "processing" or "computing", "calculating", "determining", "displaying", "copying," "producing," "storing," "adding," "applying," "executing," "maintaining," "updating," "creating," "constructing" "generating" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments of the present techniques also relate to an apparatus for performing the operations herein. This apparatus may be specially constructed for the required purposes, or it may comprise a general-purpose computer selectively activated or reconfigured by a computer program stored in the computer (e.g., one or more sets of instructions). Such a computer program may be stored in a computer readable medium. A computer-readable medium includes any mechanism for storing or transmitting information in a form readable by a machine (e.g., a computer). For example, but not limited to, a computer-readable (e.g., machine-readable) medium includes a machine (e.g., a computer) readable storage medium (e.g., read only memory ("ROM"), random access memory ("RAM"), magnetic disk storage media, optical storage media, flash memory devices, etc.), and a machine (e.g., computer) readable transmission medium (electrical, optical, acoustical or other form of propagated signals (e.g., carrier waves, infrared signals, digital signals, etc.)).

Furthermore, as will be apparent to one of ordinary skill in the relevant art, the modules, features, attributes, methodologies, and other aspects of the invention can be implemented as software, hardware, firmware or any combination of the three. Of course, wherever a component of the present invention is implemented as software, the component can be implemented as a standalone program, as part of a larger program, as a plurality of separate programs, as a statically or dynamically linked library, as a kernel loadable module, as a device driver, and/or in every and any other way known now or in the future to those of skill in the art of computer programming. Additionally, the present techniques are in no way limited to implementation in any specific operating system or environment.

As an example, a computer system may be utilized and configured to implement on or more of the present aspects. The computer system may include a plurality of processors; memory in communication with the processors; and a set of instructions stored on the memory and accessible by the processors, wherein the set of instructions, when executed, are configured to: obtain a three dimensional (3D) Earth model representing a subsurface region; determine one or more reservoir targets within the 3D Earth model; define one or more reservoir segments in the 3D Earth model, wherein each of the reservoir segments pass through at least a portion of one of the target reservoirs; evaluate the reservoir segments; and create a well plan based on the reservoir segments to provide a fluid flow path from the one or more reservoir targets to a well pad from one or more of the reservoir segments. In certain embodiments, the set of instructions may perform the different aspects in the methods noted above or the algorithm noted above.

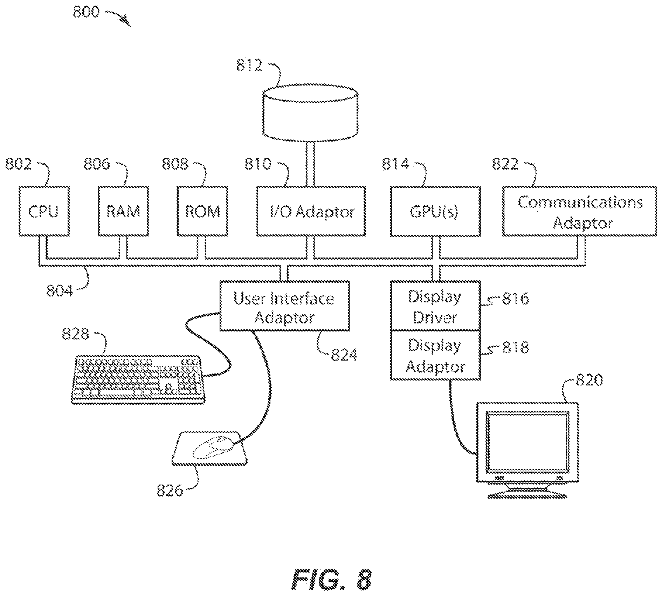

As an example, the techniques discussed herein may be implemented on a computing device, such as that shown in Figure 8. Figure 8 shows an exemplary computer system **800** on which software for performing processing operations of embodiments of the present techniques may be implemented. A central processing unit (CPU) **802** is coupled to a system bus **804.** The CPU **802** may be any general-purpose CPU. The present techniques are not restricted by the architecture of CPU **802** (or other components of exemplary system **800**) as long as the CPU **802** (and other components of system **800**) supports operations according to the techniques described herein.

The CPU **802** may execute the various logical instructions according to the disclosed techniques. For example, the CPU **802** may execute machine-level instructions for performing processing according to the exemplary operational flow described above, such as in conjunction with Figures 2 and 5. As a specific example, the CPU **802** may execute machine-level instructions for performing the methods of Figures 2 and 5.

The computer system **800** may also include random access memory (RAM) **806,** which may be SRAM, DRAM, SDRAM, or the like. The computer system **800** may include read-only memory (ROM) **808** which may be PROM, EPROM, EEPROM, or the like. The RAM **806** and the ROM **808** hold user and system data and programs, as is well known in the art. The programs may include code stored on the RAM **806** that may be used for modeling geologic properties with homogenized mixed finite elements, in accordance with embodiments of the present techniques.

The computer system **800** may also include an input/output (I/O) adapter **810,** a communications adapter **822,** a user interface adapter **824,** and a display adapter **818.** The I/O adapter **810,** user interface adapter **824,** and/or communications adapter **822** may, in certain embodiments, enable a user to interact with computer system **800** to input information. Further, the computer system **800** may also include a graphical processing unit (GPU(s)) to enhance the graphical processing of the computer system **800.**

The I/O adapter **810** may connect the bus **804** to storage device(s) **812,** such as one or more of hard drive, compact disc (CD) drive, floppy disk drive, tape drive, flash drives, USB connected storage, etc. to computer system **800.** The storage devices may be used when RAM **806** is insufficient for the memory requirements associated with storing data for operations of embodiments of the present techniques. For example, the storage device **812** of computer system **800** may be used for storing such information as computational meshes, intermediate results and combined data sets, and/or other data used or generated in accordance with embodiments of the present techniques.

The communications adapter **822** is adapted to couple the computer system **800** to a network (not shown), which may enable information to be input to and/or output from the system **800** via the network, for example, the Internet or other wide-area network, a local-area network, a public or private switched telephone network, a wireless network, or any combination of the foregoing. The user interface adapter **824** couples user input devices, such as a keyboard **828,** a pointing device **826,** and a microphone (not shown) and/or output devices, such as speaker(s) (not shown) to computer system **800.** The display driver **816** and display adapter **818** are driven by the CPU **802** to control the display on the display device **820,** for example, to display information pertaining to a target area under analysis, such as displaying a generated representation of the computational mesh, the reservoir, or the target area, according to certain embodiments.

The present techniques are not limited to the architecture of the computer system 800 shown in Figure 8. For example, any suitable processor-based device may be utilized for implementing all or a portion of embodiments of the present techniques, including without limitation personal computers, laptop computers, computer workstations, and multi-processor servers. Moreover, embodiments may be implemented on application specific integrated circuits (ASICs) or very large scale integrated (VLSI) circuits. In fact, persons of ordinary skill in the art may utilize any number of suitable structures capable of executing logical operations according to the embodiments. In one embodiment of the present techniques, the computer system may be a networked multi-processor system.

While the present techniques may be susceptible to various modifications and alternative forms, the exemplary embodiments discussed above have been shown only by way of example. However, it should again be understood that the present techniques are not intended to be limited to the particular embodiments disclosed herein. Indeed, the present techniques include all alternatives, modifications, and equivalents falling within the scope of the appended claims.

## Claims

1. A method of well planning for obtaining hydrocarbons comprising:
obtaining a three dimensional (3D) Earth model (100; 130; 300; 400; 600; 620; 640; 660; 700; 720; 730) representing a subsurface region;
determining one or more reservoir targets (107a, 107b, 109a, 109b, 111a, 111b, 113a, 113b; 137a, 137b, 139a, 139b, 141a, 141b, 143a, 143b; 306, 307, 314, 315) within the 3D Earth model;
creating a well plan to provide a fluid flow path from the one or more reservoir targets to a well pad (402; 702; 722);
**CHARACTERISED BY**:
defining one or more reservoir segments (106, 108, 110, 112; 136, 138, 140, 142; 305, 313; 405,407,409,411; 606, 608,610, 612; 626, 628, 630, 632) in the 3D Earth model, wherein each of the reservoir segments pass through at least a portion of one of the target reservoirs;
evaluating the reservoir segments; and
creating the well plan based on the reservoir segments to provide the fluid flow path from the one or more reservoir targets to a well pad (402; 702; 722) through the one or more of the reservoir segments,
wherein evaluating the reservoir segments comprises:
obtaining one or more of geographic data, geological data and seismic data (642, 644) associated with the subsurface region;
comparing the one or more of geographic data, geological data and seismic data associated with the subsurface region with the reservoir segments to verify the reservoir segments;
calculating a cost function for the reservoir segments;
determining whether the calculated cost function is within a threshold; and
updating the reservoir segments if the cost function does not satisfy the threshold.

2. The method of claim 1, wherein evaluating the reservoir segments comprises:
calculating a cost function that minimizes net sand or net pay penetrated by one and/or more of the reservoir segments based on one or more of the reservoir segments.

3. The method of any one of claims 1 or 2, wherein geographic data comprises one or more of topography data and infrastructure data, and wherein geologic data comprises one or more of type of rock, structural framework and hazards.

4. The method of any one of claims 1 to 3, wherein creating the well plan comprises determining a well trajectory for each of a plurality of slots in the well pad to one of the one or more reservoir segments.

5. The method of any one of claims 1 to 4, wherein creating the well plan comprises:
determining a common surface location for the well pad;
coupling the common surface location to the one or more reservoir segments; and evaluating the well plan.

6. The method of any one of claims 1 to 5, wherein creating the well plan comprises determining whether a pad location and well trajectory satisfy the engineering constraints and/or geological constraints.

7. The method of any one of claims 1 to 6, wherein the one or more reservoir segments comprise a straight section defined by two points between or relative to one or two surfaces.

8. The method of any one of claims 1 to 7, wherein the one or more reservoir segments comprise a curved section defined by two points between or relative to one or two surfaces.

9. The method of any one of claims 1 to 8, wherein the one or more reservoir segments comprise a continuous line defined by two points between or relative to one or two surfaces.

10. The method of any one of claims 1 to 9, comprising defining one or more completion intervals after the one or more reservoir segments are defined; wherein the one or more completion intervals comprise one or more perforations and/or completion hardware.

11. The method of any one of claims 1 to 10, further comprising:
drilling one or more wellbore based on the well plan;
producing hydrocarbons from the one or more wellbore.

12. A system for well planning comprising:
a processor;
memory coupled to the processor; and
a set of instructions stored in the memory and accessible by the processor, wherein the set of instructions, when executed, are configured to perform the method recited in any one of claims 1 to 11.

## Patentansprüche

1. Verfahren zur Bohrlochplanung zum Erhalten von Kohlenwasserstoffen, bei dem
ein dreidimensionales (3D)-Erdmodell (100; 130; 300; 400; 600; 620; 640; 660; 700; 720; 730) erhalten wird, das eine unterirdische Region repräsentiert;
ein oder mehrere Reservoirziele (107a, 107b, 109a, 109b, 111a, 111b, 113a, 113b; 137a, 137b, 139a, 139b, 141a, 141b, 143a, 143b; 306, 307, 314, 315) innerhalb des 3D-Erdmodells bestimmt werden;
ein Bohrlochplan erstellt wird, um einen Fluidflusspfad von dem einen oder den mehreren Reservoirzielen zu einer Bohrplatzfläche (402; 702; 722) zu erstellen;
**dadurch gekennzeichnet, dass**
ein oder mehrere Reservoirsegmente (106, 108, 110, 112; 136, 138, 140, 142; 305, 313; 405, 407, 409, 411; 606, 608,610, 612; 626, 628, 630, 632) in dem 3D-Erdmodell definiert werden, wobei jedes der Reservoirsegmente mindestens einen Abschnitt von einem der Zielreservoire passiert;
die Reservoirsegmente beurteilt werden; und
der Bohrlochplan basierend auf den Reservoirsegmenten erstellt wird, um den Fluidflusspfad von dem einen oder den mehreren Reservoirzielen zu einer Bohrplatzfläche (402; 702; 722) durch das eine oder die mehreren der Reservoirsegmente hindurch bereitzustellen,
wobei bei dem Beurteilen der Reservoirsegmente
ein oder mehrere von geografischen Daten, geologischen Daten und seismischen Daten (642, 644) erhalten werden, die der unterirdischen Region zugeordnet sind;
die einen oder mehreren der geografischen Daten, geologischen Daten und seismischen Daten, die der unterirdischen Region zugeordnet sind, mit den Reservoirsegmenten verglichen werden, um die Reservoirsegmente zu verifizieren;
eine Kostenfunktion für die Reservoirsegmente berechnet wird; bestimmt wird, ob die berechnete Kostenfunktion innerhalb eines Schwellenwerts liegt; und
die Reservoirsegmente aktualisiert werden, wenn die Kostenfunktion den Schwellenwert nicht erfüllt.

2. Verfahren nach Anspruch 1, bei dem die Reservoirsegmente beurteilt werden, indem
basierend auf einem oder mehreren der Reservoirsegmente eine Kostenfunktion berechnet wird, die Nettosanddicke oder Nettodicke der porösen geologischen Einheiten minimiert, die von einem und/oder mehreren der Reservoirsegmente durchdrungen wird bzw. werden.

3. Verfahren nach einem der Ansprüche 1 oder 2, bei dem geografische Daten ein oder mehrere von Topografiedaten und Infrastrukturdaten umfasst bzw. umfassen, und bei dem geologische Daten ein oder mehrere von Gesteinstyp, Strukturgerüst und Gefahren umfasst bzw. umfassen.

4. Verfahren nach einem der Ansprüche 1 bis 3, bei dem das Erstellen des Bohrlochplans umfasst, dass eine Bohrrichtung für jede von einer Vielzahl von Stellen in der Bohrplatzfläche zu einem des einen oder der mehreren Reservoirsegmente bestimmt wird.

5. Verfahren nach einem der Ansprüche 1 bis 4, bei dem der Bohrlochplan erstellt wird, indem
ein gemeinsamer Oberflächenort für die Bohrplatzfläche bestimmt wird;
der gemeinsame Oberflächenort an das eine oder die mehreren Reservoirsegmente gekoppelt wird, und
der Bohrlochplan beurteilt wird.

6. Verfahren nach einem der Ansprüche 1 bis 5, bei dem das Erstellen des Bohrlochplans die Bestimmung umfasst, ob ein Ort einer Bohrplatzfläche und die Bohrrichtung den technischen Randbedingungen und/oder geologischen Randbedingungen genügen.

7. Verfahren nach einem der Ansprüche 1 bis 6, bei dem das eine oder die mehreren Reservoirsegmente einen geraden Abschnitt umfasst bzw. umfassen, der durch zwei Punkte zwischen oder relativ zu einer oder mehreren Flächen definiert ist.

8. Verfahren nach einem der Ansprüche 1 bis 7, bei dem das eine oder die mehreren Reservoirsegmente einen gekrümmten Abschnitt umfasst bzw. umfassen, der durch zwei Punkte zwischen oder relativ zu einer oder mehreren Flächen definiert ist.

9. Verfahren nach einem der Ansprüche 1 bis 8, bei dem das eine oder die mehreren Reservoirsegmente eine kontinuierliche Linie umfasst bzw. umfassen, die durch zwei Punkte zwischen oder relativ zu einer oder mehreren Flächen definiert ist.

10. Verfahren nach einem der Ansprüche 1 bis 9, bei dem ein oder mehrere Komplettierungsintervalle definiert werden, nachdem ein oder mehrere Reservoirsegmente definiert worden sind, wobei das eine oder die mehreren Komplettierungsintervalle eine oder mehrere Perforationen und/oder Komplettierungsgeräte umfasst bzw. umfassen.

11. Verfahren nach einem der Ansprüche 1 bis 10, bei dem ferner ein oder mehrere Bohrungen basierend auf dem Bohrlochplan gebohrt werden;
Kohlenwasserstoffe aus der einen oder den mehreren Bohrungen produziert werden.

12. System zur Bohrlochplanung, welches
einen Prozessor;
an den Prozessor gekoppelten Speicher und
einen Satz von Anweisungen umfasst, die in dem Speicher gespeichert und für den Prozessor zugänglich sind, wobei der Satz der Anweisungen bei Ausführung konfiguriert ist, um das Verfahren gemäß einem der Ansprüche 1 bis 11 durchzuführen.

## Revendications

1. Procédé de planification de puits pour l'obtention d'hydrocarbures comprenant :
l'obtention d'un modèle tridimensionnel (3D) de la terre (100 ; 130 ; 300 ; 400 ; 600 ; 620 ; 640 ; 660 ; 700 ; 720 ; 730) représentant une région souterraine ;
la détermination d'une ou plusieurs cibles de réservoir (107a, 107b, 109a, 109b, 111a, 111b, 113a, 113b ; 137a, 137b, 139a, 139b, 141a, 141b, 143a, 143b ; 306, 307, 314, 315) à l'intérieur du modèle 3D de la terre ;
la création d'un plan de puits pour fournir un passage de fluide depuis la ou les cibles de réservoir jusqu'à une aire de puits (402 ; 702 ; 722) ;
**CARACTERISE PAR** :
la définition d'un ou plusieurs segments de réservoir (106, 108, 110, 112 ; 136, 138, 140, 142 ; 305, 313 ; 405, 407, 409, 411 ; 606, 608, 610, 612 ; 626, 628, 630, 632) dans le modèle 3D de la terre, chacun des segments de réservoir passant à travers au moins une partie d'un des réservoirs cibles ;
l'évaluation des segments de réservoir ; et
la création du plan de puits sur la base des segments de réservoir pour fournir le passage de fluide depuis la ou les cibles de réservoir jusqu'à une aire de puits (402 ; 702 ; 722) à travers le ou les segments de réservoir ;
dans lequel l'évaluation des segments de réservoir comprend :
l'obtention de données géographiques, et/ou de données géologiques, et/ou de données sismiques (642, 644) associées à la région souterraine ;
la comparaison des données géographiques, et/ou des données géologiques, et/ou des données sismiques associées à la région souterraine avec les segments de réservoir pour vérifier les segments de réservoir ;
le calcul d'une fonction de coût pour les segments de réservoir ;
la détermination que la fonction de coût calculée est ou n'est pas à l'intérieur d'un seuil ; et
l'actualisation des segments de réservoir si la fonction de coût ne satisfait pas le seuil.

2. Procédé de la revendication 1, dans lequel l'évaluation des segments de réservoir comprend :
le calcul d'une fonction de coût qui minimise l'épaisseur nette de sable ou l'épaisseur utile pénétrée par un et/ou plusieurs des segments de réservoir sur la base d'un ou plusieurs des segments de réservoir.

3. Procédé de l'une quelconque des revendications 1 ou 2, dans lequel les données géographiques comprennent des données de topographie et/ou des données d'infrastructure, et dans lequel les données géologiques comprennent un type de roche, et/ou un canevas structural et/ou des risques.

4. Procédé de l'une quelconque des revendications 1 à 3, dans lequel la création du plan de puits comprend la détermination d'une trajectoire de puits pour chacun d'une pluralité d'évidements dans l'aire de puits jusqu'à un du ou des segments de réservoir.

5. Procédé de l'une quelconque des revendications 1 à 4, dans lequel la création du plan de puits comprend :
la détermination d'un emplacement de surface commun pour l'aire de puits ;
le couplage de l'emplacement de surface commun au(x) segment(s) de réservoir ; et
l'évaluation du plan de puits.

6. Procédé de l'une quelconque des revendications 1 à 5, dans lequel la création du plan de puits comprend l'étape consistant à déterminer si un emplacement d'aire et une trajectoire de puits satisfont les contraintes techniques et/ou les contraintes géologiques.

7. Procédé de l'une quelconque des revendications 1 à 6, dans lequel le ou les segments de réservoir comprennent une section droite définie par deux points entre ou par rapport à une ou deux surfaces.

8. Procédé de l'une quelconque des revendications 1 à 7, dans lequel le ou les segments de réservoir comprennent une section courbe définie par deux points entre ou par rapport à une ou deux surfaces.

9. Procédé de l'une quelconque des revendications 1 à 8, dans lequel le ou les segments de réservoir comprennent une ligne continue définie par deux points entre ou par rapport à une ou deux surfaces.

10. Procédé de l'une quelconque des revendications 1 à 9, comprenant la définition d'un ou plusieurs intervalles de complétion après que le ou les segments de réservoir ont été définis ; le ou les intervalles de complétion comprenant une ou plusieurs perforations et/ou du matériel de complétion.

11. Procédé de l'une quelconque des revendications 1 à 10, comprenant en outre :
le perçage d'un ou plusieurs puits de forage sur la base du plan de puits ;
la production d'hydrocarbures à partir du ou des puits de forage.

12. Système de planification de puits comprenant :
un processeur ;
une mémoire couplée au processeur ; et
un ensemble d'instructions stockées dans la mémoire et accessibles au processeur, l'ensemble d'instructions, lorsqu'il est exécuté, étant configuré pour effectuer le procédé selon l'une quelconque des revendications 1 à 11.
